# EUROPEAN PATENT APPLICATION

(11) **EP 1 530 908 A1**
(43) Date of publication of application: **18.05.2005**
(21) Application number: 04105797.7
(22) Date of filing: 16.11.2004
(51) Int. Cl.: A23K 1/16, A23N 17/00

(54) **Process for the preparation of feed comprising additives**

(30) Priority: 17.11.2003 IT MI20032225
(71) Applicant: DOX-AL ITALIA S.p.A., I-20050 Correzzana Milano (IT)
(72) Inventor: Grabitz, Ernst Bernard, 20050, CASATENOVO (IT); Veneroni, Flavio, 20050, CORREZZANA (IT); Garzarelli, Giuseppe, 20050, CASATENOVO (IT)
(74) Representative: Gervasi, Gemma, Dr.

(57) **Abstract**

A new process is described for the preparation of animal feed comprising one or more additives, wherein the additives are added to the feed at the end of the production cycle of the feed, thereby preventing contamination of the processing plants, while nonetheless obtaining a finished feed with excellent characteristics of stability and compactness.

## Description

### FIELD OF THE INVENTION

The present invention relates to a process for the preparation of animal feed comprising additives.

### STATE OF THE ART

The majority of animal feeds on the market are added with various types of substances having different medicinal, nutritional or technological functions. Some of the most widely used pharmaceutical products are vaccines, antibiotics, and coccidiostats; nutritional supplements, such as vitamins, oligoelements, enzymes and amino acids are also widely used in this sector, while flavourings, preservatives, dyes and the like are usually added to feeds for technological purposes.

Generally these additives, which form the micro-ingredients present in the feed, are added as such, or in the form of pre-mixes with other additive, to the macro ingredients (corn, soya, barley, etc.). More specifically, to prepare a feed, the macro ingredients are normally taken from silos and, if not already in the form of flour, they are made to pass inside a mill where milling takes place and then sent to a mixer into which the additives are fed directly. Prior to being sent to the packaging phase, the feed comprising the macro ingredients and additives is subjected to any possible treatment processes to obtain the finished feed in the desired form; the finished feed may for example be powdered, in pellets, crumbled, shredded, extruded or flaked.

These preparation procedures of feeds containing additives, in which the additive is always added during the preparation phase of the feed, have negative implications from the point of view of contamination of the plant: in fact, the homogeneity of batches of feed subsequently prepared in the same plant is endangered.

Currently, the problem of contamination of plants is solved by subjecting the plant to washing procedures, which consist in the preparation of "cleaning feeds" after each batch of feed has been prepared. Even if the cleaning preparations are generally re-utilised, these "washing procedures" still cause a considerable increase in production costs and, moreover, it has been found that contamination can still spread, even to the next twenty batches.

The difficulty in managing the problem of feed contamination has thus induced many producers to provide separate production lines for medicated and non-medicated feeds. However, the problem of contamination also persists in this case, as it is impossible to provide the same number of production lines as the additives that may be used, and as it is sometimes necessary to vary the quantities of the same additive from one batch to another.

The undesired aspects resulting from the contamination of plants are many, the most important of which are listed below:
- failure to respect regulations which, on the subject of feeds, prohibit contaminations;
- failure to respect the quality specifications of brands and of distributors due to the presence on undeclared substances;
- unpredictable consequences for the health of operators in charge of producing feeds, due to emissions of undeclared substances, for the health of consumers and for the environment, due to the presence of undeclared substances;
- phenomena of incompatibility and resistance to antibiotics developed by animals following consumption of feeds in which undeclared substances are present.

Besides the problem of contamination, another extremely important problem, linked to the addition of micro-ingredients during the preparation of feeds, is that of lack of stability of some of these added substances which, being added to the feed during preparation, are then subjected to all the stresses of the subsequent phases of the technological process of the feed, such as strong friction, high temperatures and pressures, etc..

Therefore, the need is deeply felt to provide a new preparation process which makes it possible to obtain feeds comprising one or more additives for feeds, without encountering the aforesaid problems found in the known production processes.

### SUMMARY OF THE INVENTION

The Applicant has now found a new process wherein the additives are added to the feed at the end of the production cycle, thereby making it possible to prevent contamination of the feed preparation plant, although nonetheless obtaining a finished feed with excellent characteristics of stability and compactness.

Subject of the present invention is therefore a process for the preparation of an animal feed comprising one or more additives for feeds, characterised in that said additives are added to the finished feed by mixing in a suitable mixer.

Features and advantages of the present invention shall be illustrated in detail in the following description.

### DETAILED DESCRIPTION OF THE INVENTION

Within the scope of the present invention, by the term "additive" or "additive for feed" is meant any substance or preparation commonly added to animal feeds for the purpose of improving the characteristics of the raw materials for feeds, improving animal production, satisfying temporary nutritional requirements of the animals or obtaining specific nutritional targets, and preventing or reducing the harmful effects caused by the environment in which the animals are kept.

Examples of additives for feeds according to the invention are food supplements, such as vitamins, provitamins, amino acids and oligoelements such as copper, cobalt, iron, zinc, manganese and molybdenum; pharmacologically active substances such as growth factors, antibiotics, sulphamidics, antiparasitics, coccidiostats and oral vaccines; substances that improve the characteristics of raw materials for feeds, such as flavours, preservatives and dyes, for example cantaxantin and astaxantin, and the like. Other additives of possible use in the feeds of the invention are inactivated micro-organisms, in particular inactivated yeasts and fractions thereof, inactivated Saccharomyces Cerevisiae and compositions comprising Saccharomyces Cerevisiae for human use, magnesium sulphate, sodium chloride, carboxymethylcellulose, sorbic acid and orthophosphoric acid.

Thermolabile additives used according to the invention, such as antibiotics, vitamins, vaccines etc., can be added to the feed in solid or liquid state, pure or diluted, if necessary with the addition of anti-oxidants, obtaining in any case a finished feed with additives with excellent quality and stability.

Where not otherwise specified, by the term "feed" a finished animal feed is meant, composed of raw materials of vegetable or animal origin, or a premix composed of raw materials with one or more micro-ingredients added, which may have been industrially processed to obtain a particular physical form, for example granulated, powdered, pelleted, crumbled, shredded, extruded or flaked feed.

A suitable mixer to for the implementation of the present process can be chosen from the air mixers and mechanical mixers commonly used in the industrial preparation of feeds.

Mixing according to the present process can, for example, be carried out for a time ranging from 5 to 30 minutes, at a mixing speed ranging between 30 and 600 rpm. In a time preferably of 15 minutes and at a speed of 400 rpm optimal results are obtained for the product of the invention.

The total amount of additives added by means of the present process may range from 0.1 to 5% by weight with respect to the weight of the feed, and is preferably equal to 0.8% by weight.

One or more binding agents can be added together with the additives during mixing, preferably in combination with dextrin; these binding agents can be chosen for example from cellulose derivatives, such as carboxymethylcellulose, ethylcellulose, methylethylcellulose, hydroxypropylcellulose and carboxymethylether cellulose sodium salt; vinyl polymers, such as povidone; polysaccharides, such as starch, agar-agar, carrageenan, alginic acid and salts thereof. Other binders of possible use in the present process are for example yellow dextrin, glycerol, glyceryl polyethyleneglycol ricinoleate, guar flour, tragacanth, esters of sugars with edible fatty acids, lecithin, glutin, sorbitol 70%, polyethyleneglycol 300, polyethyleneglycol 400, phosphoric acid and the like.

The binding agent preferably used in the process of the invention is povidone in the form of 30% aqueous solution and mixed with dextrin.

The amount of binding agent added during mixing may, for example, range from 0.1 to 6% by weight with respect to the weight of the feed, and is preferably equal to 1.6% by weight.

The present process as described above has proved to be suitable to prepare feeds with additives, having excellent characteristics of stability and compactness in a large spectrum of various additives and various quantities of the same additive.

The following examples are reported as a non-limiting illustration of the invention.

### EXAMPLE 1

A vertical cylindrical mixer with anchor stirrer with a speed up to 400 rpm, already in movement, was loaded with 1 kg of fish feed obtained by extrusion, marketed with the name Progress 09® , in the form of uniform spheres with a diameter of approximately 1 mm. Subsequently, 40 g of Oxiter® 200 liquid containing 20% of oxytetracycline was added, and mixing was continued for 15 minutes. There were no variations in the uniform appearance of the surface of the final product thus obtained examined with a magnifying glass (f = 12 mm).

### EXAMPLE 2

The same type of mixer described in Example 1 and already in movement was loaded with 1 kg of feed of the same type described in Example 1. Subsequently, 8 g of oxytetracycline, 10 g of dextrin and 20 g of a 30% aqueous solution of povidone were added. Mixing was continued for 15 minutes.

The final product thus obtained, examined with a magnifying glass (f = 12 mm), contained no free particles. The surface of the spheres also appeared uniform and dry.

### EXAMPLE 3

The same type of mixer described in Example 1 and already in movement was loaded with 1 kg of feed of the same type described in Example 1. Subsequently, 40 g of water-soluble Oxiter® 200, containing 20% of oxytetracycline, 10 g of dextrin and 20 g of a 30% aqueous solution of povidone were added. Mixing was continued for 15 minutes.

The final product thus obtained, examined with a magnifying glass (f = 12 mm), contained a few unbound particles. The surface of the spheres appeared uniform and dry.

### EXAMPLE 4

The preparation described in Example 1 was repeated using 20 kg of feed instead of 1 kg, obtaining the same satisfactory results.

### EXAMPLE 5

The preparation described in Example 3 was repeated using 20 kg of feed instead of 1 kg, obtaining the same satisfactory results.

## Claims

1. Process for the preparation of animal feed comprising one or more additives for feeds, **characterised in that** said additives are added to the finished feed by mixing in a suitable mixer.

2. Process according to claim 1, wherein said mixer is chosen from air mixers and mechanical mixers.

3. Process according to claim 1, wherein said mixing is carried out for a time ranging from 5 to 30 minutes, at a mixing speed ranging between 30 and 600 rpm.

4. Process according to claim 1, wherein said mixing is carried out for a time of 15 minutes and at a speed of 400 rpm.

5. Process according to claim 1, wherein said finished feed is a feed composed of raw materials of vegetal or animal origin, or a premix composed of raw materials with one or more micro-ingredients added, industrially processed to obtain a particular physical form.

6. Process according to claim 5, wherein said finished feed is in a form selected from the group consisting of granulated, powdered, pelleted, crumbled, shredded, extruded or flaked form.

7. Process according to claim 1, wherein said additives are chosen from food supplements, pharmacologically active substances, inactivated micro-organisms and substances that improve the characteristics of the raw materials for feeds.

8. Process according to claim 7, wherein said food supplements are chosen from vitamins, provitamins, amino acids and oligoelements such as copper, cobalt, iron, zinc, manganese and molybdenum.

9. Process according to claim 7, wherein said pharmaceutically active substances are chosen from growth factors, antibiotics, sulphamidics, antiparasitics, coccidiostats and oral vaccines.

10. Process according to claim 7, wherein said substances that improve the characteristics of the raw materials for feeds are chosen from flavours, preservatives and dyes.

11. Process according to claim 7, wherein said inactivated micro-organisms are chosen from inactivated yeasts and fractions thereof, inactivated Saccharomyces Cerevisiae and compositions comprising Saccharomyces Cerevisiae for human use, magnesium sulphate, sodium chloride, carboxymethylcellulose, sorbic acid and orthophosphoric acid.

12. Process according to claim 1, wherein said additives are added in a total amount ranging from 0.1 to 5% by weight with respect to the weight of the feed.

13. Process according to claim 12, wherein said additives are added in a total amount of 0.8% by weight with respect to the weight of the feed.

14. Process according to claim 1, wherein one or more binding agents are also added to the finished feed together with said additives.

15. Process according to claim 14, wherein said binding agents are selected from the group consisting of carboxymethylcellulose, ethylcellulose, methylethylcellulose, hydroxypropylcellulose and carboxymethylether cellulose sodium salt, povidone, starch, agar-agar, carrageenan, alginic acid and its salts, yellow dextrin, glycerol, glyceryl polyethyleneglycol ricinoleate, guar flour, tragacanth, esters of sugars with edible fatty acids, lecithin, glutin, sorbitol 70%, polyethyleneglycol 300, polyethyleneglycol 400, phosphoric acid and mixtures thereof.

16. Process according to claim 14, wherein a mixture of dextrin and 30% aqueous solution of povidone is added as binding agent.

17. Process according to claim 14, wherein the amount of binding agent added ranges from 0.1 to 6% by weight with respect to the weight of the feed.

18. Process according to claim 14, wherein the amount of binding agent added is equal to 1.6% by weight with respect to the weight of the feed.
